# EUROPEAN PATENT APPLICATION

(11) **EP 4 544 897 A1**
(43) Date of publication of application: **30.04.2025**
(21) Application number: 24208235.2
(22) Date of filing: 22.10.2024
(51) Int. Cl.: A01D 41/06, A01D 41/14, F15B 7/00, A01B 63/10

(54) **SYSTEM FOR ADJUSTING HARVESTING IMPLEMENT POSITION OF AN AGRICULTURAL HARVESTER**

(30) Priority: 24.10.2023 US 202318493208
(71) Applicant: CNH Industrial America LLC, New Holland, PA 17557 (US)
(72) Inventor: Trowbridge, Jeffrey C., New Holland, 17557 (US)
(74) Representative: CNH Industrial IP Department

(57) **Abstract**

A system for adjusting harvesting implement position of an agricultural harvester includes a primary power circuit and an auxiliary power circuit each configured to selectively generate a flow of pressurized hydraulic fluid. Additionally, the system includes a hydraulic actuator including a cylinder, a first piston slidably positioned within the cylinder such that a first chamber is defined within the cylinder, and a second piston slidably positioned within the cylinder and movable relative to the first piston such that a second chamber and a third chamber are defined within the cylinder. Additionally, the hydraulic actuator includes a rod coupled between the first piston and the implement. Furthermore, when the flow of pressurized fluid from the auxiliary power circuit is supplied to the second chamber or the third chamber, the flow causes movement of the rod relative to the cylinder such that the position of the implement is adjusted.

## Description

### FIELD OF THE INVENTION

The present disclosure generally relates to agricultural harvesters and, more particularly, to systems for adjusting harvesting implement position of an agricultural harvester.

### BACKGROUND OF THE INVENTION

An agricultural harvester is an agricultural machine used to harvest and process crops. For instance, a forage harvester may be used to cut and comminute silage crops, such as grass and corn. Similarly, a combine harvester may be used to harvest grain crops, such as wheat, oats, rye, barely, corn, soybeans, and flax or linseed. In general, the objective is to complete several processes, which traditionally were distinct, in one pass of the machine over a particular part of the field. In this regard, most harvesters are equipped with a detachable harvesting implement, such as a header, which cuts and collects the crop from the field and feeds it to the base harvester for further processing.

Conventionally, many harvesting implements utilize a primary power circuit to generate and supply hydraulic fluid to one or more actuators used to raise, lower, and/or otherwise actuate the harvesting implement. The primary power circuit of the harvester is also used to generate and supply hydraulic fluid to other systems of the harvester, such as, for example, the threshing and separating system. As such, utilizing the primary power circuit of the harvester for the harvesting implement actuator(s) also requires activation of other systems/components of the harvester. However, activating other systems/components of the harvester in addition to the actuator(s) requires significant time and energy.

Accordingly, an improved system for adjusting a harvesting implement position of an agricultural harvester would be welcomed in the technology.

### SUMMARY OF THE INVENTION

Aspects and advantages of the technology will be set forth in part in the following description, or may be obvious from the description, or may be learned through practice of the technology.

In one aspect, the present subject matter is directed to a system for adjusting harvesting implement position of an agricultural harvester. The system includes a primary power circuit configured to selectively generate a primary flow of pressurized hydraulic fluid. The system also includes an auxiliary power circuit configured to selectively generate an auxiliary flow of pressurized hydraulic fluid. Additionally, the system includes a hydraulic actuator including a cylinder. Furthermore, the hydraulic actuator includes a first piston slidably positioned within the cylinder such that a first chamber is defined within the cylinder between a first end of the cylinder and the first piston. Moreover, the hydraulic actuator includes a second piston slidably positioned within the cylinder and movable relative to the first piston such that a second chamber is defined within the cylinder between the first piston and the second piston, and a third chamber is defined between the second piston and a second end of the cylinder. Additionally, the hydraulic actuator includes a rod coupled between the first piston and the harvesting implement. Furthermore, when supplied to the second chamber or the third chamber, the auxiliary flow of pressurized fluid causes movement of the rod relative to the cylinder such that a position of the harvesting implement is adjusted.

In another aspect, the present subject matter is directed to an agricultural harvester. The agricultural harvester, in turn, includes a frame and a threshing assembly configured to process harvested crop material. Furthermore, the agricultural harvester includes a primary power circuit configured to selectively generate a primary flow of pressurized hydraulic fluid for powering the threshing assembly. The agricultural harvester also includes an auxiliary power circuit configured to selectively generate an auxiliary flow of pressurized hydraulic fluid. Additionally, the agricultural harvester includes a hydraulic actuator including a cylinder. Furthermore, the hydraulic actuator includes a first piston slidably positioned within the cylinder such that a first chamber is defined within the cylinder between a first end of the cylinder and the first piston. Moreover, the hydraulic actuator includes a second piston slidably positioned within the cylinder and movable relative to the first piston such that a second chamber is defined within the cylinder between the first piston and the second piston, and a third chamber is defined between the second piston and a second end of the cylinder. Additionally, the hydraulic actuator includes a rod coupled between the first piston and the harvesting implement. Furthermore, when supplied to the second chamber or the third chamber, the auxiliary flow of pressurized fluid causes movement of the rod relative to the cylinder such that a position of the harvesting implement is adjusted.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a partial sectional side view of one embodiment of an agricultural harvester in accordance with aspects of the present subject matter;
FIG. 2 illustrates a simplified, schematic view of one embodiment of a harvesting implement of an agricultural harvester in accordance with aspects of the present subject matter;
FIG. 3 illustrates a cross-sectional view of one embodiment of a hydraulic actuator of the harvesting implement taken about Line 3-3 in FIG. 2 in accordance with aspects of the present subject matter;
FIG. 4 illustrates a schematic view of one embodiment of a system for adjusting a harvesting implement position of an agricultural harvester in accordance with aspects of the present subject matter; and
FIG. 5 illustrates a flow diagram of one embodiment of control logic for adjusting the harvesting implement position of an agricultural harvester in accordance with aspects of the present subject matter.

Repeat use of reference characters in the present specification and drawings is intended to represent the same or analogous features or elements of the present technology.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to systems for adjusting harvesting implement position of an agricultural harvester. As will be described below, the disclosed system includes a primary power circuit. The primary power circuit is configured to selectively generate flow of pressurized hydraulic fluid to power one or more components or assemblies of an agricultural harvester. In particular, the primary power circuit powers components and/or assemblies of the agricultural harvester, such as the threshing assembly. As will also be described below, the disclosed system includes an auxiliary power circuit. The auxiliary power circuit is configured to selectively generate flow of pressurized hydraulic fluid to power the same components and/or assemblies of the agricultural harvester powered by the primary power circuit when the primary power circuit is not operating. As such, the primary power circuit and the auxiliary power circuit are independently operable of each other.

Additionally, the system includes a hydraulic actuator configured to move/adjust the position of the harvesting implement. In this respect, the hydraulic actuator includes a cylinder, first and second pistons slideably positioned within the cylinder, and a rod coupled between the first piston and the harvesting implement. Multiple chambers are also defined within the cylinder. For instance, the first piston is slideably positioned within the cylinder such that a first chamber is defined within the cylinder between a first end of the cylinder and the first piston. The second piston is also slideably positioned within the cylinder and movable relative to the first piston such that a second chamber is defined within the cylinder between the first and second piston, and a third chamber is defined between the second piston and a second end of the cylinder. In this respect, when a valve of the primary power circuit is open and a valve of the auxiliary power circuit is closed, the primary flow of pressurized hydraulic fluid generated by the primary power circuit enters the second chamber and moves the first piston such that the rod moves/adjusts the position of the harvesting implement. Likewise, when the valve of the auxiliary power circuit is open and the valve of the primary power circuit is closed, the auxiliary flow of pressurized hydraulic fluid generated by the auxiliary power circuit enters the third chamber and moves the second piston. The second piston, in turn, moves the first piston such that the rod moves/adjusts the position of the harvesting implement.

The disclosed system improves the operation of the agricultural harvester. More specifically, the primary power circuit of the harvester generates and supplies a primary flow of pressurized hydraulic fluid to other systems of the harvester in addition to the hydraulic actuator, such as, for example, as mentioned previously, the threshing assembly. As such, activation of the hydraulic actuator using the primary power circuit also requires activation of other systems/components of the harvester, such as the threshing assembly, which require significant time and energy. However, the auxiliary power circuit may be used to generate and supply pressurized hydraulic fluid to the hydraulic actuator and does not require activation of other systems/components of the harvester, such as the threshing assembly. As such, the auxiliary power circuit may be used to activate the hydraulic actuator in lieu of using the primary power circuit to do so. Furthermore, the hydraulic actuator may be configured and operate in the manner described above such that primary power circuit and the auxiliary power circuit may be used to generate and supply pressurized hydraulic fluid to the hydraulic actuator and such that the pressurized hydraulic fluid from the two power circuits does not mix within the hydraulic actuator.

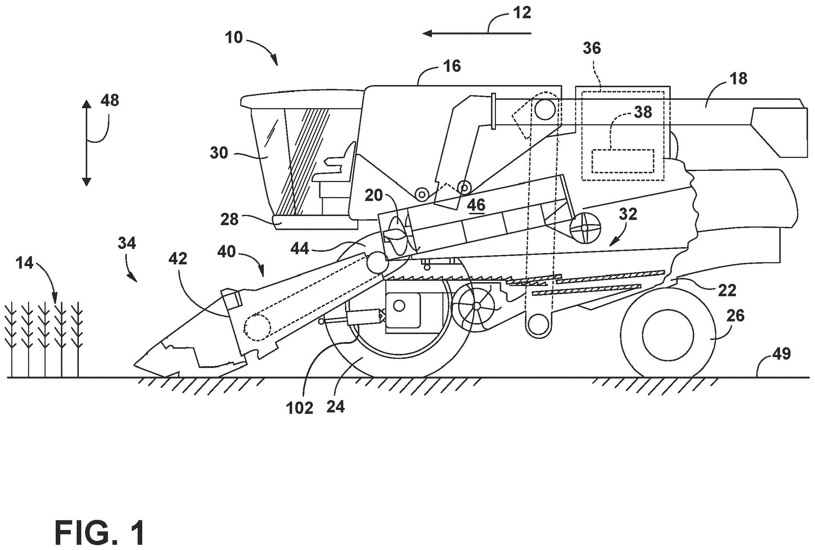

Referring now to the drawings, FIG. 1 illustrates a partial sectional side view of an agricultural harvester 10. In general, the agricultural harvester 10 may be configured to travel across a field in a forward direction of travel (indicated by arrow 12) to harvest a crop 14. While traversing the field, the agricultural harvester 10 may be configured to process and store the harvested crop within a crop tank 16 of the agricultural harvester 10. Furthermore, the harvested crop may be unloaded from the crop tank 16 for receipt by the crop receiving vehicle (not shown) via a crop discharge tube 18 of the agricultural harvester 10. Moreover, as shown, in the illustrated embodiment, the agricultural harvester 10 is configured as an axial-flow type combine in which the harvested crop is threshed and separated while being advanced by and along a longitudinally arranged rotor 20. However, in alternative embodiments, the agricultural harvester 10 may have any other suitable harvester configuration, such as a traverse-flow type configuration.

The agricultural harvester 10 may include a chassis or main frame 22 configured to support and/or couple to various components of the agricultural harvester 10. For example, in several embodiments, the agricultural harvester 10 may include a pair of driven, front wheels 24 and a pair of steerable, rear wheels 26 coupled to the frame 22. As such, the wheels 24, 26 may be configured to support the agricultural harvester 10 relative to the ground and move the agricultural harvester 10 in the forward direction of travel 12. Furthermore, the agricultural harvester 10 may include an operator's platform 28 having an operator's cab 30, a crop processing system 32, the crop tank 16, and the crop discharge tube 18 that are supported by the frame 22. As will be described below, the crop processing system 32 may be configured to perform various processing operations on the harvested crop as the crop processing system 32 transfers the harvested crop between the harvesting implement 34 of the agricultural harvester 10 and the crop tank 16.

Furthermore, the agricultural harvester 10 may include an engine 36 and a transmission 38 mounted on the frame 22. The transmission 38 may be operably coupled to the engine 36 and may provide variably adjusted gear ratios for transferring engine power to the wheels 24 via a drive axle assembly (or via axles if multiple drive axles are employed).

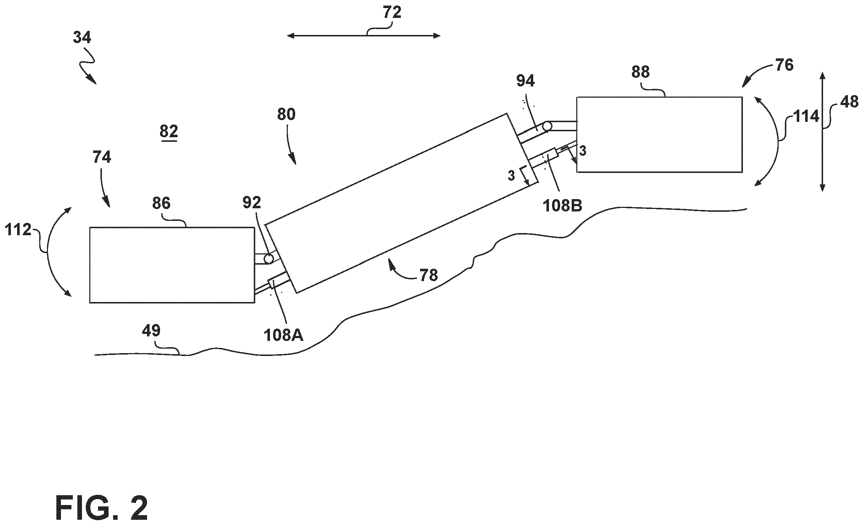

Moreover, as shown in FIG. 1, the harvesting implement 34 and an associated feeder 40 of the crop processing system 32 extend forward of the frame 22 and are pivotably coupled thereto for generally vertical movement. In general, the feeder 40 may support the harvesting implement 34. As shown in FIG. 1, the feeder 40 extends between a front end 42 coupled to the harvesting implement 34 and a rear end 44 positioned adjacent to a threshing and separating assembly 46 of the crop processing system 32. The rear end 44 of the feeder 40 may, in turn, be pivotably coupled to a portion of the agricultural harvester 10. In this respect, the front end 42 of the feeder 40 and, thus, the harvesting implement 34 may be moved upward and downward along a vertical direction (indicated by arrow 48) relative to a field surface 49 to maintain a generally constant cutting height above the field surface 49 as the contour of the field surface changes. As such, the agricultural harvester 10 may include one or more lift actuators 102 configured to adjust the height of the harvesting implement 34 relative to the field surface 49. Furthermore, one or more sections of the harvesting implement 34, which will be described in detail below in reference to FIG. 2, may be moved along the vertical direction (indicated by arrow 48) relative to the field surface 49 and/or along a transverse direction 72 (FIG. 2) to fold the section(s) of the harvesting implement 34 when the harvesting implement 34 is not being used. As such, the agricultural harvester 10 may include one or more pivot actuators 108A, 108B configured to adjust the height of the harvesting implement 34 relative to the field surface 49.

Referring now to FIG. 2, a simplified, schematic view of one embodiment of a harvesting implement 34 of an agricultural harvester 10 is illustrated in accordance with aspects of the present subject matter. As shown, the harvesting implement 34, which is configured as a header, extends in the transverse direction (indicated by arrow 72) between a first side 74 and a second side 76, with the transverse direction 72 extending perpendicular to the direction of travel 12. Moreover, the harvesting implement 34 extends in the vertical direction 48 between a bottom end 78 and a top end 80. As will be described below, the harvesting implement 34 may be coupled to the agricultural harvester 10 such that the position of the harvesting implement 34 relative to the frame 22 of the agricultural harvester 10 may be adjusted within a plane 82 defined by the vertical and transverse directions 48, 72.

In several embodiments, as mentioned previously, the harvesting implement 34 may include a plurality of sections. For example, as shown in FIG. 2, in the illustrated embodiment, the harvesting implement 34 includes a center section 84, a first wing section 86, and second wing section 88. Specifically, in such an embodiment, the first wing section 86 may be pivotably coupled to the center section 84 adjacent to the first side at a pivot joint 92. Additionally, the second wing section 88 may be pivotably coupled to the center section 84 adjacent to the second side 76 at a pivot joint 94. As such, the positions of sections 86, 88 may be independently adjustable relative to the field surface 49 to fold the sections 86, 88 of the harvesting implement 34 when the harvesting implement 34 is not being used. However, in alternative embodiments, the harvesting implement 34 may have any other suitable number of sections and/or configurations.

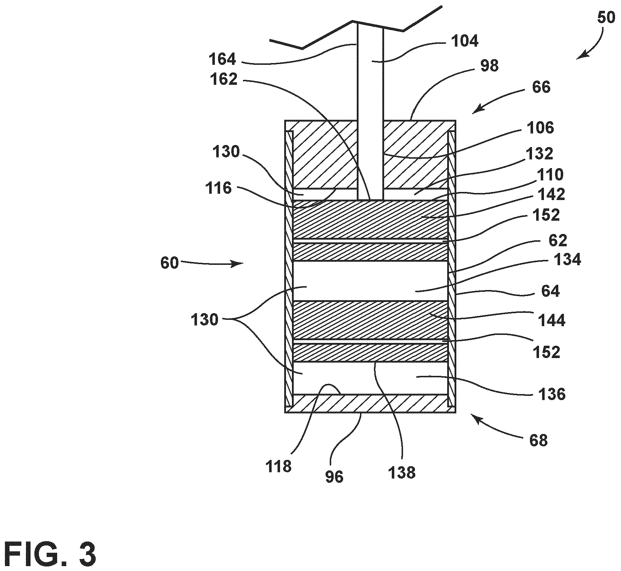

Moreover, one or more actuators may be configured to adjust the position of the harvesting implement 34 relative to the harvester frame 22 within the plane 82 defined by the vertical and transverse directions 48, 72 to fold the first and second wing sections 86, 88 of the harvesting implement 34 when the harvesting implement 34 is not being used. As shown in FIG. 2, first and second pivot actuators 108A, 108B may be respectively coupled between the center section 84 of the harvesting implement 34 and the first and second sections 86, 88 of the harvesting implement 34. As such, the first pivot actuator 108A may be configured to pivot the first section 86 of the harvesting implement 34 relative to the center section 84 of the harvesting implement 34 about the pivot joint 92 (e.g., as indicated by the arrow 112 in FIG. 2). Similarly, the second pivot actuator 108B may be configured to pivot the second section 88 of the harvesting implement 34 relative to the center section 84 of the harvesting implement 34 about the pivot joint 94 (e.g., as indicated by the arrow 114 in FIG. 2). As shown in FIG. 2, such positional adjustments of the harvesting implement 34 and/or the sections 86, 88 allow folding of the first and second wing sections 86, 88 of the harvesting implement 34 when the harvesting implement 34 is not being used. As will be described below in reference to FIG. 3, the actuators 108A, 108B correspond to hydraulic actuators.

It should be further appreciated that the configuration of the agricultural harvester 10 and the harvesting implement 34 described above and shown in FIGS. 1 and 2 is provided only to place the present subject matter in an exemplary field of use. Thus, it should be appreciated that the present subject matter may be readily adaptable to any manner of agricultural harvester and/or harvesting implement configuration.

Referring now to FIG. 3, a cross-sectional view of a hydraulic actuator 108 of the agricultural harvester 10 taken about Line 3-3 is illustrated in accordance with aspects of the present subject matter.

As shown in FIG. 3, the hydraulic actuator 108 includes a cylinder 60. The cylinder 60 extends from a first end 66 to a second end 68 and includes an inner surface 62 and an outer surface 64. Additionally, the inner surface 62 of the cylinder 60 defines a cavity 130 extending between the first and second ends 66, 68 that is configured to receive pressurized hydraulic fluid. In this respect, as shown in FIG. 3, the first end 66 and the second end 68 of the cylinder 60 each define an opening such that the cavity 130 of the cylinder 60 is configured to receive a gland 98 and a rod 104 therein at the first end 66 of the cylinder 60 and an end cap 96 therein at the second end 68 of the cylinder 60. However, it should be appreciated that the cavity 130 of the cylinder 60 may be configured to receive the end cap 96 therein at the first end 66 of the cylinder and the gland 98 and the rod 104 therein at the second end 68 of the cylinder 60. Furthermore, the end cap 96 is configured to seal the opening at the second end 68 of the cylinder 60 such that the pressurized hydraulic fluid is contained within the cylinder 60. Additionally, the gland 98 defines a channel 106 therethrough such that the gland 98 is configured to receive the rod 104 therethrough. In this respect, the rod 104 may be received within the cavity 130 of the cylinder 60.

Furthermore, as shown in FIG. 3, the hydraulic actuator 108 includes a first piston 142 slideably positioned within the cylinder 60. Specifically, the first piston 142 may be positioned within the cavity 130 of the cylinder 60 and configured to move along the cavity 130. In this respect, a first chamber 132 may be defined within the cavity 130 of the cylinder 60 between the first piston 142 and the first end 66 of the cylinder 60. As shown in FIG. 3, the first chamber 132 is defined by the inner surface 62 of the cylinder 60, an inner surface 116 of the gland 98 received within the first end 66 of the cylinder 60, and a first surface 110 of the first piston 142. However, it should be appreciated that the first piston 142 may be positioned at any suitable location within the cavity 130 of the cylinder 60. For example, the first piston 142 may be positioned such that the first chamber 132 is defined within the cavity 130 of the cylinder 60 between the first piston 142 and the second end 68 of the cylinder 60 such that the first chamber 132 is defined by the inner surface 62 of the cylinder 60, an inner surface 118 of the end cap 96 received within the second end 68 of the cylinder 60, and a first surface 138 of the first piston 142.

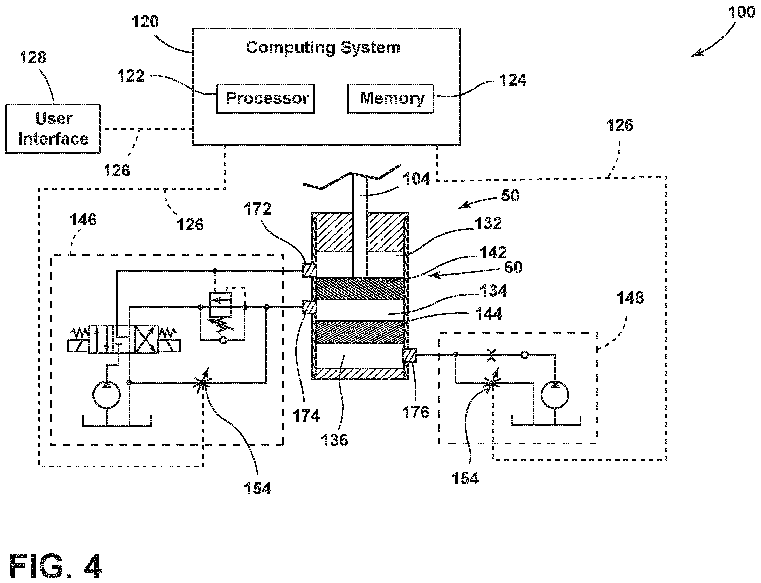

Additionally, the first chamber 132 is configured to receive pressurized hydraulic fluid therein. For example, as will be described below in reference to FIG. 4, the first chamber 132 may be configured to receive a primary flow of pressurized hydraulic fluid (e.g., oil) from a primary power circuit 146 and/or an auxiliary flow of pressurized hydraulic fluid (e.g., oil) from an auxiliary power circuit 148 of the agricultural harvester 10 such that the first piston 142 is moved along the cavity 130 of the cylinder 60 away from the first end 66 of the cylinder 60. Furthermore, the first piston 142 fluidly isolates the flow of pressurized hydraulic fluid, such as the primary flow and/or the auxiliary flow of pressurized hydraulic fluid. As such, the first piston 142 may include one or more seals 152 (e.g., O-ring(s)) coupled thereto to prevent pressurized hydraulic fluid from passing between the first chamber 132 and any chamber adjacent to the first chamber such as, for example, a second chamber 134 described below.

Moreover, as shown in FIG. 3, the hydraulic actuator 108 includes a second piston 144 slideably positioned within the cylinder 60. The second piston 144 is movable relative to the first piston 142. Specifically, the second piston 144 may be positioned within the cavity 130 of the cylinder 60 between the first piston 142 and the second end 68 of the cylinder 60 and configured to move along the cavity 130. In this respect, the second chamber 134 may be defined within the cavity 130 of the cylinder 60 between the first piston 142 and the second piston 144. Likewise, a third chamber 136 may be defined within the cavity 130 of the cylinder 60 between the second piston 144 and the second end 68 of the cylinder 60. As shown in FIG. 3, the third chamber 136 is defined by the inner surface 62 of the cylinder 60, the inner surface 118 of the end cap 96 received within the second end 68 of the cylinder 60, and the first surface 138 of the second piston 144.

However, it should be appreciated that the second piston 144 may be positioned at any suitable location within the cavity 130 of the cylinder 60. For example, the second piston 144 may be positioned such that the third chamber 136 is defined within the cavity 130 of the cylinder 60 between the second piston 144 and the first end 66 of the cylinder 60.

Additionally, the second chamber 134 and the third chamber 136 are each configured to receive a flow of pressurized hydraulic fluid. For example, as will be described below in reference to FIG. 4, the second chamber 134 may be configured to receive a primary flow of pressurized hydraulic fluid from a primary power circuit 146 and/or an auxiliary flow of pressurized hydraulic fluid from an auxiliary power circuit 148 of the agricultural harvester 10 such that the first piston 142 is moved along the cavity 130 of the cylinder 60 toward the first end 66 of the cylinder 60. Likewise, the third chamber 136 may be configured to receive a primary flow of pressurized hydraulic fluid from a primary power circuit 146 and/or an auxiliary flow of pressurized hydraulic fluid from an auxiliary power circuit 148 of the agricultural harvester 10 such that the second piston 144 and the first piston 142 are is moved along the cavity 130 of the cylinder 60 toward the first end 66 of the cylinder 60. Moreover, the second piston 144 fluidly isolates the flow of pressurized hydraulic fluid, such as the primary flow and/or the auxiliary flow of pressurized hydraulic fluid. As such, the second piston 144 may include one or more seals 152 (e.g., O-ring(s)) coupled thereto to prevent pressurized hydraulic fluid from passing between the second chamber 134 and any chamber adjacent to the second chamber 134 such as, for example, the first chamber 132 and/or the third chamber 136.

Furthermore, the hydraulic actuator 108 includes a rod 104 coupled between the first piston 142 and the harvesting implement 34. As shown in FIG. 3, the rod 104 extends from a rod first end 162, which is coupled to the first piston 142, to a rod second end 164, which is coupled to the harvesting implement 34 (e.g., a section of the harvesting implement). As such, the rod 104 extends through the channel 106 of the gland 98 and is configured to move through the channel 106 of the gland 98 and also adjust a position of the harvesting implement 34 when the first piston 142 is moved along the cavity 130 of the cylinder 60, such as by a flow of pressurized hydraulic fluid. Specifically, the rod 104 may move the first section 86 of the harvesting implement 34 such that the first section 86 pivots relative to the center section 84 of the harvesting implement 34 about the pivot joint 92. Similarly, the rod 104 may move the second section 88 of the harvesting implement 34 such that the second section 88 pivots relative to the center section 84 of the harvesting implement 34 about the pivot joint 94. In this respect, the rod 104 of the hydraulic actuator 108 may move the harvesting implement 34 between an unfolded position for use in harvesting, and a folded position for use in transport and/or storage. However, it should be appreciated that the rod 104 may be coupled to, and configured to adjust a position of, any other suitable harvesting implement of an agricultural harvester and/or groundengaging tool of a work vehicle. Additionally, in alternative embodiments, the rod 104 may be coupled between the second piston 144 and the harvesting implement 34. For example, the first piston 142 may define a channel (not shown) therethrough such that the first piston 142 is configured to receive the rod 104 therethrough. As such, the rod first end 162 may be coupled to the second piston 144 and the rod second 164 may be coupled to the harvesting implement 34. As such, the rod 104 is configured to move through the channel 106 of the gland 98 and also adjust the position of the harvesting implement 34 when the second piston 144 is moved along the cavity 130 of the cylinder 60, such as by a flow of pressurized hydraulic fluid.

Referring now to FIG. 4, a schematic view of a system 100 for adjusting harvesting implement position of an agricultural harvester 10 is illustrated in accordance with aspects of the present subject matter. In general, the system 100 will be described herein with reference to the agricultural harvester 10, harvesting implement 34, and hydraulic actuator 108 described above with reference to FIGS. 1-3. However, it should be appreciated by those of ordinary skill in the art that the disclosed system 100 may generally be utilized with agricultural harvesters and/or harvesting implements having any other suitable harvester and/or implement configuration.

As shown in FIG. 4, the system 100 includes a primary power circuit 146 configured to selectively generate a primary flow of pressurized hydraulic fluid. The primary power circuit 146 is fluidly coupled to and configured to supply a primary flow of pressurized hydraulic fluid to the hydraulic actuator 108 through one or more ports of the hydraulic actuator 108. For example, as shown in FIG. 4, the primary power circuit 146 is fluidly coupled to the first chamber 132 of the cylinder 60 via a first port 172 and fluidly coupled to the second chamber 134 of the cylinder 60 via a second port 174. The first port 172 is associated with the first chamber 132 of the cylinder 60 such that the first port 172 is configured to convey the primary flow of pressurized hydraulic fluid between the primary power circuit 146 and the first chamber 132. Likewise, the second port 174 is associated with the second chamber 134 of the cylinder 60 such that the second port 174 is configured to convey the primary flow of pressurized hydraulic fluid between the primary power circuit 146 and the second chamber 134 (e.g., from the primary power circuit 146 and into the second chamber 134). However, it should be appreciated that the primary power circuit 146 may be fluidly coupled to and configured to supply the primary flow of pressurized hydraulic fluid to other suitable chambers of the cylinder 60. For example, the primary power circuit 146 may be fluidly coupled to the third chamber 136 via the third port 176. Moreover, the primary power circuit 146 may be coupled to and configured to supply the primary flow of pressurized hydraulic fluid simultaneously to the hydraulic actuator 108 and one or more components of the agricultural harvester 10. For example, the primary power circuit 146 may be coupled to and configured to supply the primary flow of pressurized hydraulic fluid to the threshing and separating assembly 46 of the crop processing system 32 of the agricultural harvester 10.

Additionally, the primary power circuit 146 includes a valve 154 configured to control the primary flow of the pressurized hydraulic fluid. For example, the valve 154 of the primary power circuit 146 may be adjustable between an open position in which the primary flow of the pressurized hydraulic fluid is conveyed from the primary power circuit 146 into the hydraulic actuator 108 (e.g., into the second chamber 134 of the cylinder 60), and a closed position in which the primary flow of the pressurized hydraulic fluid is restricted from being conveyed from the primary power circuit 146 into the hydraulic actuator 108. Furthermore, the valve 154 of the primary power circuit 146 may be manually adjustable (e.g., hand lever) between the open position and the closed position, or automatically adjustable, for example, via an associated computing system 120.

Furthermore, as shown in FIG. 4, the system 100 includes an auxiliary power circuit 148 configured to selectively generate an auxiliary flow of pressurized hydraulic fluid. The auxiliary power circuit 148 is fluidly coupled to and configured to supply the auxiliary flow of pressurized hydraulic fluid to the hydraulic actuator 108 through one or more ports of the hydraulic actuator 108. For example, as shown in FIG. 4, the auxiliary power circuit 148 is fluidly coupled to the third chamber 136 of the cylinder 60 via a third port 176. The third port 176 is associated with the third chamber 136 of the cylinder 60 such that the third port 176 is configured to convey the auxiliary flow of pressurized hydraulic fluid between the auxiliary power circuit 148 and the third chamber 136 (e.g., from the auxiliary power circuit 148 and into the third chamber 136). However, it should be appreciated that the auxiliary power circuit 148 may be fluidly coupled to and configured to supply the auxiliary flow of pressurized hydraulic fluid to any suitable chamber of the cylinder 60 via any suitable port. For example, the auxiliary power circuit 148 may be fluidly coupled to the first chamber 132 via the first port 172 and/or the second chamber 134 via the second port 174.

Moreover, the auxiliary power circuit 148 and the primary power circuit 146 are independently operable. For example, the auxiliary power circuit 148 may supply the auxiliary flow of pressurized hydraulic fluid to the hydraulic actuator 108 when the primary power circuit 146 is not supplying the primary flow of pressurized hydraulic fluid to the hydraulic actuator 108 or vice versa. However, the auxiliary power circuit 148 may also supply the auxiliary flow of pressurized hydraulic fluid to the hydraulic actuator 108 simultaneously to the primary power circuit 146 supplying the primary flow of pressurized hydraulic fluid to the hydraulic actuator 108.

Likewise, the auxiliary power circuit 148 includes a valve 154 configured to control the auxiliary flow of the pressurized hydraulic fluid. For example, the valve 154 of the auxiliary power circuit 148 may be adjustable between an open position in which the auxiliary flow of the pressurized hydraulic fluid is conveyed from the auxiliary power circuit 148 into the hydraulic actuator 108 (e.g., into the third chamber 136 of the cylinder 60), and a closed position in which the auxiliary flow of the pressurized hydraulic fluid is restricted from being conveyed from the auxiliary power circuit 148 into the hydraulic actuator 108. Furthermore, the valve 154 of the auxiliary power circuit 148 may be manually adjustable (e.g., hand lever) between the open position and the closed position, or automatically adjustable, for example, via an associated computing system 120

Furthermore, as shown in FIG. 4, the system 100 may include a computing system 120 positioned on and/or within or otherwise associated with the agricultural harvester 10 and communicatively coupled to one or more components of the agricultural harvester 10 to allow the operation of such components to be electronically or automatically controlled by the computing system 120. For example, the computing system 120 may be communicatively coupled to the primary power circuit 146 and the auxiliary power circuit 148 via a communicative link 126. As such, the computing system 120 may be configured to open and close the valve 154 of the primary power circuit 146 and the valve 154 of the auxiliary power circuit 148 to allow and/or prevent the flow of pressurized hydraulic fluid from being received within the hydraulic actuator 108.

In general, the computing system 120 may comprise any suitable processor-based device known in the art, such as a given controller or computing device or any suitable combination of controllers or computing devices. Thus, in several embodiments, the computing system 120 may include one or more processor(s) 122 and associated memory device(s) 124 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 124 of the computing system 120 may generally comprise memory element(s) including, but not limited to, a computer readable medium (e.g., random access memory (RAM)), a computer readable non-volatile medium (e.g., a flash memory), a floppy disc, a compact disc-read only memory (CD-ROM), a magneto-optical disc (MOD), a digital versatile disc (DVD), and/or other suitable memory elements. Such memory device(s) 124 may generally be configured to store suitable computer-readable instructions that, when implemented by the processor(s) 122, configure the computing system 120 to perform various computer-implemented functions, such as one or more aspects of the methods and algorithms that will be described herein. In addition, the computing system 120 may also include various other suitable components, such as a communications circuit or module, one or more input/output channels, a data/control bus and/or the like.

It should be appreciated that the computing system 120 may correspond to an existing computing system(s) of the agricultural harvester 10, itself, or the computing system 120 may correspond to a separate processing device. For instance, in one embodiment, the computing system 120 may form all or part of a separate plug-in module that may be installed in association with the agricultural harvester 10 to allow for the disclosed systems to be implemented without requiring additional software to be uploaded onto existing control devices of the agricultural harvester 10.

It should also be appreciated that the various functions of the computing system 120 may be performed by a single processor-based device or may be distributed across any number of processor-based devices, in which instance such devices may be considered to form part of the computing system 120. For instance, the functions of the computing system 120 may be distributed across multiple application-specific controllers such as a navigation controller, an engine controller, an implement controller, and/or the like.

Furthermore, in one embodiment, the system 100 may also include a user interface 128. More specifically, as will be described below, the user interface 128 may be configured to display a graphical user interface to the operator of the agricultural harvester 10 indicating a current operational status of the primary power circuit and/or the auxiliary power circuit (e.g., valve position). As such, the user interface 128 may include one or more display screens or display devices (e.g., an LCD screen(s)) configured to display a graphical user interface. In this respect, the user interface 128 may be communicatively coupled to the computing system 120 via the communicative link 126 to permit the data associated with the graphical user interface to be transmitted from the computing system 120 to the user interface 128. In some embodiments, the user interface 128 may also include other feedback devices (not shown), such as speakers, warning lights, and/or the like, configured to provide additional feedback from the computing system 120 to the operator. In addition, the user interface 128 may include one or more input devices, such as touchscreens, keypads, touchpads, knobs, buttons, sliders, switches, mice, microphones, and/or the like, which are configured to receive user inputs from the operator. In one embodiment, the user interface 128 may be mounted or otherwise positioned within the operator's cab 30 of the agricultural harvester 10. However, in alternative embodiments, the user interface 128 may be mounted at any other suitable location.

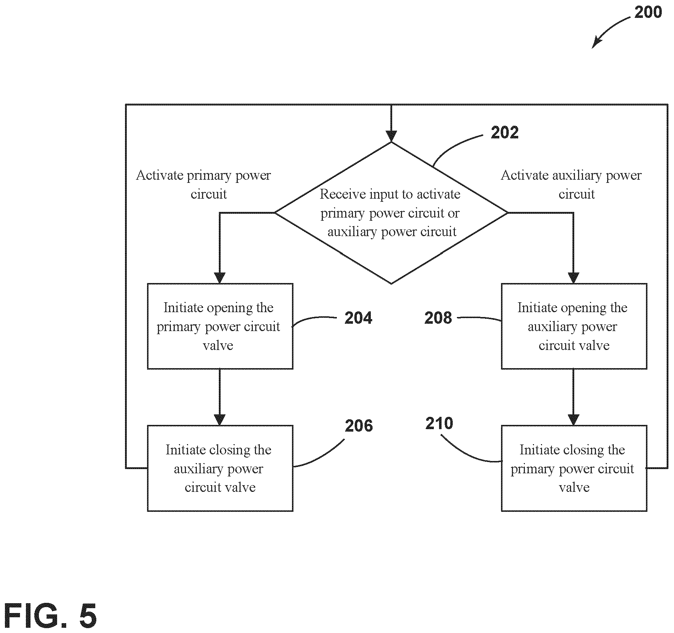

Referring now to FIG. 5, a flow diagram of one embodiment of example control logic 200 that may be executed by the computing system 120 (or any other suitable computing system) for adjusting harvesting implement position of an agricultural harvester is illustrated in accordance with aspects of the present subject matter. Specifically, the control logic 200 shown in FIG. 5 is representative of steps of one embodiment of an algorithm that can be executed to adjust harvesting implement position of an agricultural harvester. Thus, in several embodiments, the control logic 200 may be advantageously utilized in association with a system installed on or forming part of an agricultural harvester 10 to allow for real-time adjustment of harvesting implement position without requiring substantial computing resources and/or processing time. However, in other embodiments, the control logic 200 may be used in association with any other suitable system, application, and/or the like for adjusting harvesting implement position. In general, the control logic 200 will be described herein with reference to the system 100 described above with reference to FIG. 4. However, in other embodiments, the control logic 200 may be used in association with any other suitable system, application, and/or the like for adjusting harvesting implement position of the agricultural harvester.

As shown in FIG. 5, at (202), the control logic 200 includes receiving an input to activate the primary power circuit or the auxiliary power circuit. Specifically, as mentioned above, in several embodiments, the computing system 120 is communicatively coupled to the user interface 128 via the communicative link 126. As such, the operator of the agricultural harvester 10 may provide one or more inputs to the user interface 128 to activate the primary power circuit 146 or the auxiliary power circuit 148. However, it should be appreciated that the computing system 120 may be configured to automatically provide one or more inputs to activate the primary power circuit 146 or activate the auxiliary power circuit 148 without any input from an operator. For example, the computing system 120 may be configured to automatically provide one or more inputs after a predetermined length of time. Such inputs are then transmitted to the computing system 120 via the communicative link 126. Such inputs allow one of the primary power circuit 146 or the auxiliary power circuit 148 to be activated (e.g., valve is opened). When the input(s) is provided to activate the primary power circuit 146 and the computing system 120 receives the input(s) to activate the primary power circuit 146, the control logic 200 proceeds to (204). On the other hand, when the input(s) is provided to activate the auxiliary power circuit 148 and the computing system 120 receives the input(s) to activate the auxiliary power circuit 148, the control logic 200 proceeds to (208).

Additionally, as shown in FIG. 5, at (204), upon receipt of the input at (202) to activate the primary power circuit, the control logic 200 includes initiating opening the valve of the primary power circuit. As mentioned previously, the computing system 120 is communicatively coupled to the primary power circuit 146 via the communicative link 126. In this respect, upon receipt of the input at (202) to activate the primary power circuit 146, the computing system 120 is configured to initiate opening the valve 154 of the primary power circuit 146. As such, when the valve 154 of the primary power circuit 146 is opened, the primary power circuit 146 supplies the primary flow of pressurized hydraulic fluid to the hydraulic actuator 108. For example, when the valve 154 is opened, the primary power circuit 146 supplies the primary flow of pressurized hydraulic fluid through the second port 174 and into the second chamber 134 of the cylinder 60. As the pressurized hydraulic fluid fills the second chamber 134 of the cylinder 60, the pressurized hydraulic fluid slides the first piston 142 within the cavity 130 of the cylinder 60. In this respect, the first piston 142 moves the rod 104 within the cavity 130 of the cylinder 60 such that the rod 104 moves the harvesting implement 34 (e.g., the first or second section 86, 88) of the agricultural harvester 10.

Furthermore, as shown in FIG. 5, at (206), upon receipt of the input at (202) to activate the primary power circuit, the control logic 200 includes initiating closing the valve of the auxiliary power circuit. As mentioned previously, the computing system 120 is communicatively coupled to the auxiliary power circuit 148 via the communicative link 126. In this respect, upon receipt of the input at (202) to activate the primary power circuit 146, the computing system 120 is configured to initiate closing the valve 154 of the auxiliary power circuit 148. As such, when the valve 154 of the auxiliary power circuit 148 is closed, the delivery of the auxiliary flow of pressurized hydraulic fluid into the hydraulic actuator 108 is prevented. For example, when the valve 154 of the auxiliary power circuit 148 is closed, the delivery of the auxiliary flow of pressurized hydraulic fluid through the third port 176 and into the third chamber 136 of the cylinder 60 is prevented. The control logic 200 then returns to (202).

Moreover, as shown in FIG. 5, at (208), upon receipt of the input at (202) to activate the auxiliary power circuit, the control logic 200 includes initiating opening the valve of the auxiliary power circuit. In this respect, upon receipt of the input at (202) to activate the auxiliary power circuit 148, the computing system 120 is configured to initiate opening the valve 154 of the auxiliary power circuit 148. As such, when the valve 154 of the auxiliary power circuit 148 is opened, the auxiliary power circuit 148 supplies the auxiliary flow of pressurized hydraulic fluid to the hydraulic actuator 108. For example, when the valve 154 is opened, the auxiliary power circuit 148 supplies the auxiliary flow of pressurized hydraulic fluid through the third port 176 and into the third chamber 136 of the cylinder 60. As the pressurized hydraulic fluid fills the third chamber 136 of the cylinder 60, the pressurized hydraulic fluid slides the second piston 144 within the cavity 130 of the cylinder 60. In this respect, the second piston 144 moves the first piston 142, either by directly contacting the first piston 142 or by the second piston 144 applying pressure to any pressurized hydraulic fluid within the second chamber 134 of the cylinder 60 received from the primary power circuit 146. Furthermore, as the second piston 144 moves the first piston 142, the first piston 142 moves the rod 104 within the cavity 130 of the cylinder 60 such that the rod 104 moves the harvesting implement 34 (e.g., the first or second section 86, 88) of the agricultural harvester 10.

Additionally, as shown in FIG. 5, at (210), upon receipt of the input at (202) to activate the auxiliary power circuit, the control logic 200 includes initiating closing the valve of the primary power circuit. In this respect, upon receipt of the input at (202) to activate the auxiliary power circuit 148, the computing system 120 is configured to initiate closing the valve 154 of the primary power circuit 146. As such, when the valve 154 of the primary power circuit 146 is closed, the delivery of the primary flow of pressurized hydraulic fluid into the hydraulic actuator 108 is prevented. For example, when the valve 154 of the primary power circuit 146 is closed, the delivery of the primary flow of pressurized hydraulic fluid through the second port 174 and into the second chamber 134 of the cylinder 60 is prevented. The control logic 200 then returns to (202).

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

## Claims

1. A system (100) for adjusting harvesting implement position of an agricultural harvester (10), the system (100) comprising:
a primary power circuit (146) configured to selectively generate a primary flow of pressurized hydraulic fluid;
an auxiliary power circuit (148) configured to selectively generate an auxiliary flow of pressurized hydraulic fluid; and
a hydraulic actuator (108) comprising:
a cylinder (60);
a first piston (142) slidably positioned within the cylinder (60) such that a first chamber (132) is defined within the cylinder (60) between a first end (66) of the cylinder (60) and the first piston (142);
a second piston (144) slidably positioned within the cylinder (60) and movable relative to the first piston (142) such that a second chamber (134) is defined within the cylinder (60) between the first piston (142) and the second piston (144), and a third chamber (136) is defined between the second piston (144) and a second end (68) of the cylinder (60); and
a rod (104) coupled between the first piston (142) and a harvesting implement of the agricultural harvester (10),
wherein, when supplied to the second chamber (134) or the third chamber (136), the auxiliary flow of pressurized fluid causes movement of the rod (104) relative to the cylinder (60) such that a position of the harvesting implement is adjusted.

2. The system of claim 1, wherein:
the first chamber (132) and the second chamber (134) are fluidly coupled to the primary power circuit (146); and
the third chamber (136) is fluidly coupled to the auxiliary power circuit (148).

3. The system of claim 1, wherein:
the third chamber (136) is fluidly coupled to the primary power circuit (146); and
the first chamber (132) and the second chamber (134) are fluidly coupled to the auxiliary power circuit (148).

4. The system according to any of the previous claims, wherein the second piston (144) fluidly isolates the primary flow of pressurized hydraulic fluid and the auxiliary flow of pressurized hydraulic fluid.

5. The system of claim 4, wherein the second piston (144) comprises one or more seals (152) to isolate the primary flow of pressurized hydraulic fluid and the auxiliary flow of pressurized hydraulic fluid.

6. The system according to any of the previous claims, wherein:
the primary power circuit (146) comprises a valve (154) moveable between an open position at which delivery of the primary flow of pressurized hydraulic fluid into the hydraulic actuator (108) is permitted and a closed position at which delivery of the primary flow of pressurized hydraulic fluid into the hydraulic actuator (108) is prevented; and
the auxiliary power circuit (148) comprises a valve (154) moveable between an open position at which delivery of the auxiliary flow of pressurized hydraulic fluid into the hydraulic actuator (108) is permitted and a closed position at which delivery of the auxiliary flow of pressurized hydraulic fluid into the hydraulic actuator (108) is prevented.

7. The system of claim 6, further comprising a computing system (120), wherein the computing system (120) is configured to:
receive an input to activate the auxiliary power circuit (148);
upon receipt of the input, initiate opening the valve (154) of the auxiliary power circuit (148); and
upon receipt of the input, initiate closing the valve (154) of the primary power circuit (146).

8. The system of claim 6, further comprising a computing system (120), wherein the computing system (120) is configured to:
receive an input to activate the primary power circuit (146);
upon receipt of the input, initiate opening the valve (154) of the primary power circuit (146); and
upon receipt of the input, initiate closing the valve (154) of the auxiliary power circuit (146).

9. The system according to claim 2 and any of the claims 4 to 8 in combination with claim 2, wherein, when the valve (154) of the auxiliary power circuit (148) is opened, the auxiliary power circuit (148) supplies a hydraulic fluid to the third chamber (136) of the cylinder (60) to slide the first piston (142) and the second piston (144) within the cylinder (60) such that the rod (104) moves the harvesting implement of the agricultural harvester (10).

10. The system according to claim 2 and any of the claims 4 to 9 in combination with claim 2, wherein, when the valve (154) of the primary power circuit (146) is opened, the primary power circuit (146) supplies the primary flow of pressurized hydraulic fluid to the second chamber (134) of the cylinder (60) to slide the first piston (142) within the cylinder (60) such that rod (104) moves the harvesting implement of the agricultural harvester (10).

11. The system according to any of the previous claims, wherein the auxiliary power circuit (148) and the primary power circuit (146) are independently operable.

12. The system according to any of the previous claims, further comprising one or more release valves configured to allow hydraulic fluid to be released from the cylinder (60).

13. An agricultural harvester, comprising:
a harvesting implement; and
a system (100) for adjusting the harvesting implement position according to any of the previous claims.
